(19) Europäisches Patentamt

European Patent Office

Office européen des brevets

(11) **EP 0 881 853 B1**

(12) **EUROPEAN PATENT SPECIFICATION**

(45) Date of publication and mention
of the grant of the patent:
**19.04.2006 Bulletin 2006/16**

(51) Int Cl.:
*H04Q 11/04* (2006.01)

(21) Application number: **97401146.2**

(22) Date of filing: **26.05.1997**

(54) **Method and arrangement for prioritized data transmission**

Verfahren und Anlage zur priorisierten Datenübertragung

Méthode et dispositif de transmission priorisée de données

(84) Designated Contracting States:
**AT BE CH DE ES FR GB IT LI NL SE**

(43) Date of publication of application:
**02.12.1998 Bulletin 1998/49**

(73) Proprietor: **ALCATEL**
**75008 Paris (FR)**

(72) Inventors:
 • **Lefebvre, Pascal Albert Emile**
  **1150 Brussels (DE)**
 • **Dobbelaere, Philippe Guillaume**
  **2610 Wilrijk (BE)**

(74) Representative: **Narmon, Gisèle Marie Thérèse et al**
**Alcatel Bell N.V.**
**Intellectual Property Department**
**Francis Wellesplein 1**
**2018 Antwerpen (BE)**

(56) References cited:
**US-A- 5 499 238**

 • **LANDSBERG P ET AL: "GENERIC QUEUE SCHEDULING: CONCEPTS AND VLSI" PROCEEDINGS OF THE CONFERENCE ON COMPUTER COMMUNICATIONS (INFOCOM), TORONTO, JUNE 12 - 16, 1994, vol. 3, 12 June 1994, INSTITUTE OF ELECTRICAL AND ELECTRONICS ENGINEERS, pages 1438-1445, XP000496609**
 • **HYMAN J ET AL: "MARS: THE MAGNET II REAL-TIME SCHEDULING ALGORITHM" PROCEEDINGS OF THE CONFERENCE ON COMMUNICATIONS ARCHITECTURES AND PROTOCOLS (SIGCOMM), ZURICH, SEPT. 3 - 6, 1991, vol. 21, NUMBER 4, 3 September 1991, ASSOCIATION FOR COMPUTING MACHINERY, pages 285-293, XP000260087**

**Description**

The present invention relates to a method for prioritised data transmission and a data transmission arrangement, as described in the preamble of claims 1 and 11.

The paper "generic queue scheduling : concepts and VLSI" of P. Landsberg and C. Zukowski, published in the proceedings of the conference on computer communications (INFOCOM) Toronto, June 12-16, 1994, vol. 3, 12 June 1994 , pages 1438-1445, XP 000496609, IEEE, presents an overview of different queue scheduling policies. On page 1439, left column, it is mentioned that an ATS mechanism partitions the network into sour separate classes. Each class, possibly a queue, is serviced some minimum number of slots out of a larger frame time. On page 1441, right column, it is mentioned that a queue which needs service, generates a request and presents a priority to a global decision block. This priority can vary from packet to pocket or be stored in a register. On page 1444, left column, it is mentioned that the values of the priority registers must be strictly ordered according to their class and possibly subclass, whereby it is explained that each subclass corresponds to a queue, leading to a set of priority classes within a traffic class, that is disjoint from the set of priority classes of any other traffic class, as is explained on page 1444, right column. This means that for the different traffic classes a range of priority values are available, the ranges being disjoint form each other, and allowing prioritized access for different queues, pertaining to the some closs.

A problem with such a method is that, for the lowest range of priorities, associated to the traffic classes with the lowest guarantee of access, it can be the case that no packets ore sent in case the queues of the higher classes are not empty. With such a method, it may occur that packets of the lowest priority traffic classes will never transmitted, in case packets of the higher priority classes remain arriving.

An object of the present invention is-therefore to provide a method and data transmission arrangement for realising prioritised data transmission between different ATM service categories, also enabling data transmission for the lowest priority ATM traffic classes.

According to the invention this object is achieved by means of the features of the method as set out in the characterising portion of claim 1 and by means of the features of the data transmission arrangement as set out in the characterising portion of claim 10.

By attributing now two priority subclasses to queues pertaining to a particular traffic class, each of these priority subclasses resulting in a different probability of accessing the common transmission medium, and by selecting the queue priority of a particular storage queue at predetermined instances from the subclass guaranteeing the higher priority, transmission of a packet from such a queue is possible. This is especially valuable for these specific ATM service classes for which no total bit rate is specified, such as the available bit rate category. By, at predetermined instances temporarily increasing the associated queue priority, leading to an increased probability of gaining the access, yet a minimum transmission of cells of this service category is provided.

As set out in claims 3 and 12, by further relating the predetermined instances at which the priority of the specific ATM service categories is selected from the higher priority subclass, to predetermined amounts of packets to be transmitted from the associated storage queue, yet a fine tuning of the minimum guaranteed cell rate in these categories is provided. This results in even a more versatile method and arrangement.

By further letting these subdasses comprise non-overlapping sets of values, as set out in claims 4 and 13, the aforementioned differentiation is even more pronounced. In addition, the connection admission control function, although not being subject of this present invention, but being an essential part of the network of which this data transmission arrangement of the present invention forms part, is seriously simplified.

A further characteristic feature of the present invention is mentioned in claims 5 and 14.

Thereby, in case the interface modules only include one storage queue, the obtained queue priorities directly correspond to the interface module priorities. In this special case each interface module in fact only receives data associated to one specific ATM service category, as will be explained more into detail in a further paragraph.

Another characteristic feature of the present invention is described in claims 6 and 15.

In this way a further differentiation, but now between different queues pertaining to differentATM service classes for which the total bit rate is not specified such as for instance the available bit rate and the unspecified bit rate class, is provided, enabling to favour some of these categories with respect to others.

The feature set out in claims 7 and 16 is especially important for guaranteeing fairness amongst identical ATM service categories, but attributed to packets entering and stored in different interface modules. By letting the priorities of the associated queues, to be adaptable after each grant cycle, fairness amongst the different competing interface modules is now obtained.

The above mentioned and other objects and features of the invention will become more apparent and the invention itself will be best understood by referring to the following description of an embodiment taken in conjunction with the accompanying drawings wherein:

Fig. 1 depicts a schematic of a first embodiment of a data transmission arrangement DTA according to the invention;

Fig. 2 shows a detailed embodiment of the queue priority determining means LIM1 QPDM1 of the data transmission arrangement DTA of Fig. 1;
Fig. 3 depicts a schematic of a second embodiment of a data transmission arrangement DTA' according to the invention; and
Fig. 4 shows a detailed embodiment of the queue priority determining means LIM1 QPDM1' of Fig. 3.

A first variant of the subject method for prioritised data transmission, performed by a corresponding first embodiment of the data transmission arrangement according to the present invention, is used for scheduling ATM data packets or cells of one input bitstream to a common transmission medium being an outgoing data bus. This is for instance used in the downstream direction of an access adapter in an ADSL network, whereby the user data is first demultiplexed amongst the different users, after which step, for each individual user, the ATM data is further scheduled to an individual user data line, taking into account the ATM service category of the data packets for this user. For each user, a first embodiment of the data transmission arrangement of the present invention is thus implemented in the access adapter.

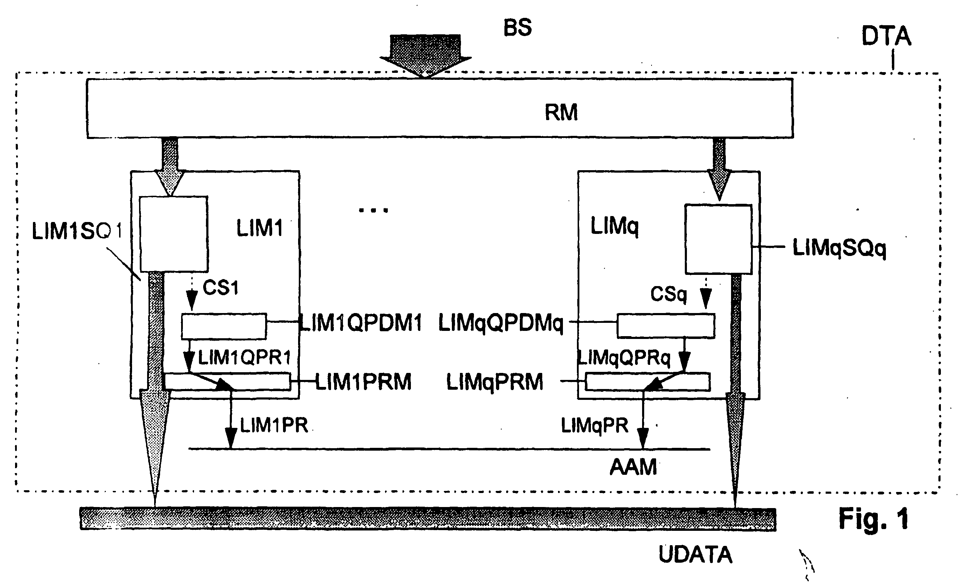

The first embodiment of the data transmission arrangement is represented as DTA in Fig. 1, with the input bitstream to it denoted BS and the common transmission medium denoted UDATA.

The first embodiment of the data transmission arrangement DTA in general consists of q interface modules, denoted LIM1 to UMq in Fig. 1 with q being on arbitrary integer number. Each of these respective interface modules LIM1 to LIMq has an interface module priority, respectively denoted LIMIPR to LIMqPR. Prioritised data transmission, based on priorities, is commonly known and described in for instance the published European Patent Application with application number 92870049.1. In this document, as well as in the first embodiment of the data transmission arrangement, the prioritised access is realised by comparing the interface module priorities, after which step access is granted to one of them, based on a predetermined comparison criterion. In the referenced document, as well as in the first embodiment of the data transmission arrangement DTA, this predetermined comparison criterion consists of selecting the interface module having the maximum amongst all interface module priorities. However other criteria can be used as well in other variants of the first embodiment. Further details concerning the granting of the access, including the use of a dedicated access request interface for priority comparison, are further and extensively described in the referenced document. A similar access interface, in Fig. 1 denoted by AAM, is used as well in the first embodiment of the data transmission arrangement DTA.

In the subject data transmission arrangement the priorities of the interface modules are however dependent upon a number of considered ATM service categories, a feature that was not present in the referenced document. To this purpose each interface module, LIM1 to LIMq includes one storage queue, denoted by LIM1SQ1 for LIM1, LIM2SQ2 for LIM2 (not shown on Fig. 1) to LIMqSQq for LIMq, which are used for temporary storing ATM cells of the incoming bitstream BS, and which individually correspond to a distinct ATM service category. In this first embodiment of the data transmission system, LIM1SQ1 and LIM1 thus correspond to ATM service category 1, LIM2SQ2 and LIM2 correspond to ATM service category 2, etc. and LIMqSQq and LIMq correspond to ATM service category q.

In general the ATM service category is determined by the value of the following parameters : cell delay variation, cell transfer delay, cell loss ratio, peak cell rate, sustainable cell rate, maximum burst size, minimum cell rate and cell delay variation tolerance, as is commonly known by a person skilled in the art. Depending on which value is specified or not, and on the specific value of these parameters , following commonly known and standardised by the ATM-Forum by specification AF-TM-0056.000 dated April 1996, ATM service categories are considered : constant bit rate, abbreviated by CBR, real-time variable bit rate, abbreviated by RT-VBR, non-real-time variable bit rate, abbreviated by NRT-VBR, available bit rate, abbreviated by ABR, and unspecified bit rate, abbreviated by UBR.

In this first embodiment these standardised ATM service categories are completed by some extra, user-specified service categories. This results in q=8 ATM service categories considered in a first variant of the first embodiment. However, this number can be easily extended for dealing with some extra user-defined or future standardised categories, by inserting extra interface modules.

In order to know which ATM service category is associated to an incoming cell or packet from bitstream BS, the value of the above named connection parameters, included in each cell under the form of some predetermined bits in the header, is first individually checked. This is performed by means of a routing means, in Fig. 1 depicted as RM. Based on the combination of the values of these connection parameters, the corresponding ATM service category associated to the checked cell is then determined, after which step this cell is further routed towards the interface module and storage queue associated to the thus determined ATM service category. These latter actions are performed by the routing means RM as well. From the above mentioned functional description, the realisation of such a routing means is commonly known to a person skilled in the art. Therefore embodiments of such a routing means are considered common knowledge and will not be further described into detail in this document.

In the first embodiment of the data transmission arrangement DTA, each interface module priority LIM1 PR to LIMqPR is determined as a distinct queue priority, denoted LIM1 QPR1 to LIMqQPRq, associated to the respective distinct storage queues LIM1SQ1 to LIMqSQq, which are included in each distinct interface module. To this purpose, within each distinct interface module LIM1 to LIMq, a distinct queue priority determining means LIM1QPDM1 to LIMqQPDMq is included which is adopted to calculate the respective distinct storage queue priority values LIM1QPR1 to LIMqQPRq. Since in this first embodiment the interface module priorities correspond to the thus determined distinct queue priorities, the interface module priority means, depicted LIM1PRM to LIMqPRM in Fig. 1 and adapted for determining the individual interface module priorities LIM1PR to LIMqPR from the distinct queue priorities LIM1QPR1 to LIMqQPRq, are very simple, and in some variants merely consist of the necessary circuitry for transmitting the distinct queue priority to the access interface, interpreting some signals sent back from this access interface (not shown in Fig. 1), and thereby generating other control signals (not shown in Fig. 1) for enabling the transmission of cells of the corresponding storage queue to the common data bus UDATA. In other variant embodiments these interface module priority means can further include some timing synchronisation circuitry adapted to control and enable the simultaneous delivery of the individual interface module priority signals to the access interface AAM. Again, the realisation of such circuits is commonly known to a person skilled in the art, and will therefore not be further considered in this document.

In the first embodiment of the data transmission arrangement DTA, the access to the common transmission medium UDATA is thus entirely based on the queue priorities, LIM1QPR1 to LIMqQPRq, which are determined by respective distinct queue priority determining means, LIM1 QPDM1 to LIMqQPDMq. Access is granted in this first embodiment to the interface module having the highest interface module priority with each module corresponding to a distinct ATM service category. In a first variant of the first embodiment, dealing with q ATM service categories and thus including q storage queues, the individual queue priority values attributed to non-empty queues, are merely distinct fixed integer values in the range 1 to q, with 1 corresponding to the ATM service category being the least delay sensitive and consequently attributed to the lowest priority, and with q corresponding to the ATM service category being the most delay sensitive and consequently being attributed to the highest priority. A priority value of 1 can for instance be attributed to the unspecified bit rate category UBR, whereas a priority value of q may be attributed to the CBR category.

Each of the distinct queue priority determining means in this first variant of the first embodiment then merely consists of a memory register storing the corresponding associated priority value, a detection means for checking the status of the associated storage queue, as well as output means for delivering the appropriate queue priority to the interface module priority means. The detection means checks whether the associated storage queue is empty, upon this condition the associated storage queue or interface module priority is for instance set to 0.

In a second variant of the first embodiment, for some queues, such as the one associated with the ABR service category, the associated storage queue priority for non-empty queues is selected from two distinct fixed integer values. This mechanism is foreseen for these ATM service categories which are normally only getting the remaining bandwidth after the other guaranteed bandwidth service categories such as the CBR category, are served. In order to guarantee the minimum cell rate specified for these categories, the priority associated to this categories is then temporary increased at predetermined instances, such that at these predetermined instances at least one increased-priority cell is enabled to be transmitted from the corresponding storage queues to the common data bus UDATA.

Depending on which ATM service categories need this mechanism, the corresponding amount of priority values has to be determined and attributed to these specific ATM service category. For instance, if only the ABR and a user-specific ATM service category are selected for having this double-priority method, q+2 priority values are to be foreseen, for instance lying between 1 and q+2.

This situation may also be represented as if two priority subclasses are associated to these specific ATM service categories : the normal low-priority so-called non-guaranteed cell-rate subclass and a artificially introduced guaranteed cell-rate subclass. In general, the guaranteed cell rate subclass priority results in a higher access probability to the data bus compared to the non-guaranteed cell rate subdass priority, attributed to the same ATM service category.

Remark that this mechanism does not have to be restricted to two priority values associated to each of the considered storage queues, but that an arbitrary amount of priority values can be attributed to each of these ATM service categories, thereby fine-tuning the method.

In another third variant of the first embodiment, this two-priority switchover principle is generalised for all ATM service categories, with the guaranteed cell rate priority subclasses having corresponding priority values lying between q+1 and 2q, and the non-guaranteed cell rate priority subclasses having priority values lying between 1 and q. Since for some service categories, e.g. CBR, the non-guaranteed subclass in fact makes no sense, this subclass, and consequently the priority switchover between the non-guaranteed and the guaranteed priority value, is therefore not used. For this ATM service category, always the highest guaranteed cell priority is applied. Similarly, for the UBR class, the non-guaranteed subclass priority is always applied.

For these storage queues and associated ATM service categories, to which the double-priority value mechanism is applicable, the associated queue priority determining means includes a selection unit, adapted to select one out of the two attributed priority values stored in a memory which is part of the queue priority determining means as well. This selection means is controlled by a programmable counter. Each time this counter has counted a programmable predetermined number of clock pulses, it generates a trigger signal for the selection means. On receipt of this trigger pulse, the seledion means chooses the guaranteed cell rate subclass priority, to be output as the queue priority value. At all other instances, the non-guaranteed cell rate priority subclass, in the first embodiment corresponding to the lowest of both priority values, is output as the queue priority value. The predetermined number of clock pulses, being the programmable counting value, is further dependent upon the ATM service category itself. This allows to temporarily favour some ATM service categories to which the priority switchover mechanism is applicable with respect to each other for gaining the access. Indeed, the shorter the counting period of the counter, the more often the guaranteed cell rate priority subclass value is output at the interface module priority means , and thus the larger the probability that this interface module will gain the access.

In a fourth variant of the first embodiment this method is even refined to guarantee a certain predetermined amount of cells per queue, denoted by B1SQ1 to BqSQq for the respective distinct storage queues LIM1SQ1 to LIMqSQq, to be attributed with their corresponding guaranteed cell rate subclass priority values. This predetermined amount of cells per queue is again programmable and dependent upon the considered ATM service category, to again introduce the possibility of favouring some service categories with respect to each other. A control signal transmitted from each distinct storage queue to the corresponding distinct queue priority determining means, in Fig. 1 denoted CS1 for LIM1SQ1 to CSq for LIMqSQq, informs each distinct queue priority determining means upon a cell being sent from the corresponding storage queue, in order to allow each queue priority determining means to count the amount of cells sent with the guaranteed cell rate subclass priority value.

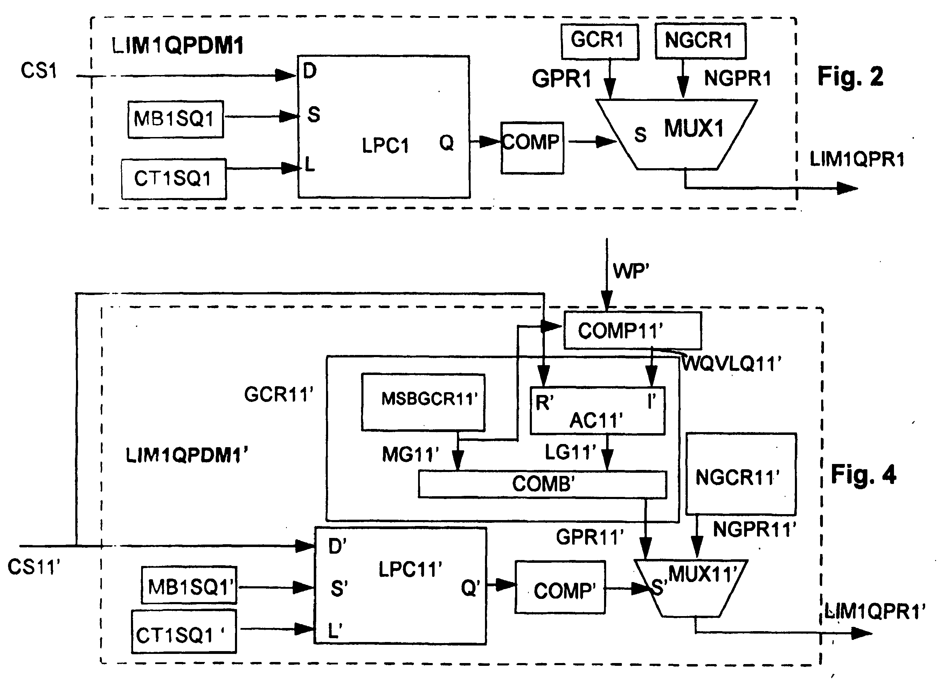

Fig. 2 depicts an implementation of the queue priority determining means LIM1QPDM1 of Fig. 1 as included in this fourth variant of the first embodiment. This queue priority determining means LIM1QPDM1 includes a first programmable counter, denoted CT1SQ1, which counts for o predetermined number T1SQ1 of clock periods. This predetermined number of clock periods is user-programmable and may for instance be loaded into this first programmable counter at the start of the operation of the data transmission arrangement. Remark that, in order to not overload the drawing, the clock input of this counter is not shown in Fig. 2

The output signal of this first programmable counter is coupled to the Load input, denoted by L, of a second load programmable counter, denoted LPC1. If the predetermined number T1SQ1 of clock periods of the first counter LPC1 have elapsed, the signal arriving at the L input of the second counter triggers this second counter to load the value B1SQ1 stored in a memory denoted MB1SQ1, to be the starting value of this second programmable counter. B1SQ1 thus corresponds to the predetermined amount of cells to be attributed with the guaranteed cell rate subclass priority values of storage queue LIM1SQ1, during the T1SQ1 clock pulses. This value is user-programmable as well and may also be loaded into the memory MB1SQ1 during initialisation of the arrangement, and at connection set-up time. This second programmable counter LPC1, decrements its output value, starting from B1 SQ1, with 1, each time a cell from the corresponding queue LIM1SQ1 is sent. The latter is indicated by the value of the CS1 signal, from storage queue LIM1SQ1 towards the D- input of the second programmable counter LPC1 as is shown in Fig. 2. The output signal of this second programmable counter, as delivered at the Q output terminal, is then checked in a comparator, denoted by COMP. In case the comparator output signal indicates that the output signal of the second counter is still positive, meaning that all B1SQ1 cells are not yet transmitted, the guaranteed cell rate subclass priority is selected to be the final queue priority LIM1QPR1. This selection is performed by a selection unit, in Fig. 2 denoted by MUX1, having as input data on one hand the value GPR1 stored in a first memory location GCR1, with GPR1 representing the associated guaranteed cell-rate priority for the service category to which LIM1 corresponds, and on the other hand the value NGPR1, stored in a second memory location, denoted NGCR1, and representing the associated non-guaranteed cell-rote priority of this some service category. Remark that both GPR1 as well as NGPR1 ore both again user-programmable, in the fourth variant of the first embodiment with GPR1 being larger that NGPR1 in order to attribute B1SQ1 cells of storage queue LIM1SQ1 with a higher priority during the T1SQ1 dock pulses of the first programmable counter. The selection is performed by the coupling of the output signal of the comparator COMP to the selection input, denoted S in Fig. 2, of the selection means MUX1. Whenever this signal is indicative of the Q output of the second programmable timer to be positive, the GPR1 value is selected as the queue priority LIM1QPR1; if the selection input value is indicative of a negative value of the Q output of the second programmable timer, the non-guaranteed cell rate priority NGPR1 is selected for being the queue priority LIM1QPR1.

The result is that during the first counter period, the corresponding predetermined amount of cells, if available in the associated storage queue, is attributed the guaranteed cell-rate priority subclass value, whereas an undefined number of other cells of the same storage queue are attributed with the non-guaranteed cell rate priority subclass values. Whether the storage queues are empty or not, is indicated by means of another control signal not shown on Fig. 2. In case of an empty storage queue, a predetermined lowest priority value, or, in general a priority value resulting in the least probability of access, is output by the corresponding queue priority determining means, as was already explained in a previous paragraph. In case not the total predetermined amount of cells are transmitted with the higher priority during the predetermined number of clock pulses of the first programmable counter, during the next cycle of the T1SQ1 clock pulses of the first counter, the second counter is loaded again with B1SQ1, during which cyde these cells can again be transmitted at this higher priority.

Remark that on Fig. 2 the logic for generating the "empty queue" priority value is not shown. This value con be easily generated by for instance inverting the (not shown) empty-queue signal and further AND-ing this inverted empty queue signal with the output value of the selection unit. By this a zero-value empty queue priority is generated at these occasions for a positive value of the empty queue signal. However other implementations are possible and trivial to a person skilled in the art.

For this fourth variant of the first embodiment of the data transmission arrangement, the sum of the predetermined amount of cells to be attributed with the guaranteed cell-rate subclass priorities", over all ATM service categories has to be smaller than the ATM user line rote of the common transmission medium UDATA since no overbooking is allowed for these categories. This can be represented by the following mathematical representation :

$$\sum_{i=1}^{q} \left( \frac{BiSQi}{TiSQi.T} \right) \leq Line\,Rate\,of\,UDATA$$

whereby BiSQi corresponds to the predetermined amount of cells to be transmitted from storage queue i, at the guaranteed cell rate subclass priority value,

whereby TiSQi corresponds to the predetermined amount of clock pulses the first programmable counter associated to storage queue 1, is counting down, and

whereby T corresponds to the time of one clock period of this first programmable counter,

and has to be guaranteed by the connection admission control function, present in another part of the network of which the data transmission system according to the invention forms part. This is necessary to not exceed the allowed number of cells to be transmitted over the common transmission medium.

Remark that by further introducing some feedback concerning the status of the queues itself for determining this programmable predetermined amount of cells to be attributed and transmitted at the guaranteed cell rate subclass priority value, or to the predetermined number of clock periods of the first programmable counter, the method and the arrangement may even be more refined.

A second embodiment of a data transmission arrangement according to the subject invention is used in the upstream direction of the same access adapter in an ADSL network, now multiplexing up to 576 ADSL lines on a single network interface, using the ATM technique. In this second embodiment again the some ATM service categories as described for the first embodiment of the data transmission arrangement are supported.

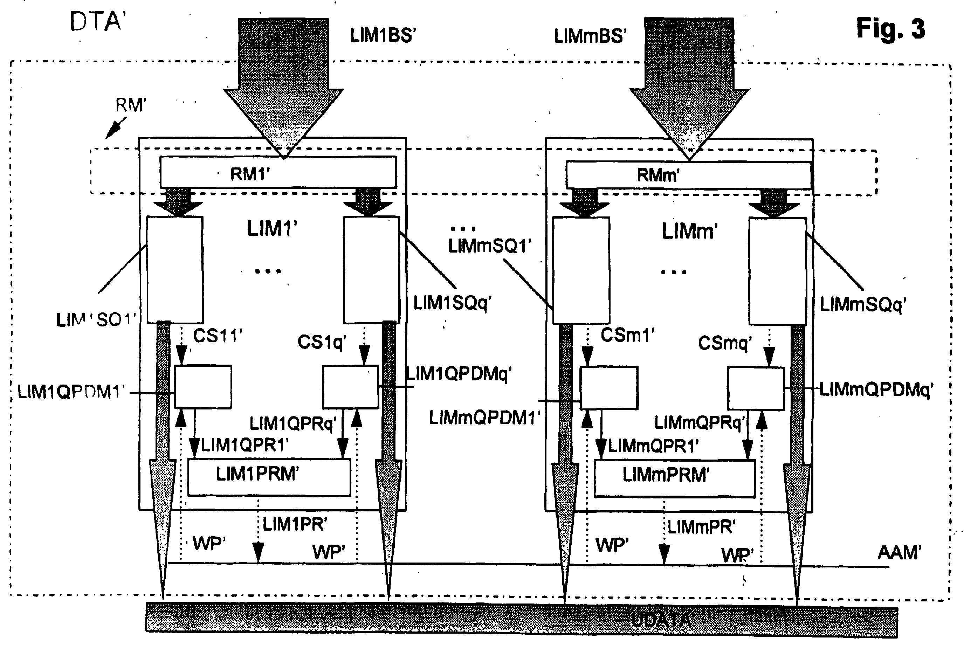

A schematic of this second embodiment of the data transmission arrangement denoted DTA' is shown in Fig. 3. Therein, each interface module, denoted LIM1' to LIMm', now includes q distinct storage queues, denoted LIM1SQ1' to LIM1SQq' for the first interface module LIM1' to LIMmSQ1' and LIMmSQq' for the mth interface module LIMm'. In this second embodiment, q, the number of storage queues per interface module, again corresponds to the number of supported ATM service categories. As for the first embodiment, q=8, but this can be easily extended by adding extra storage queues within each interface module.

In this embodiment ATM cells or packets of separate incoming bitstreams, denoted LIM1BS' for the first interface module LIM1' to LIMmBS' for the mth interface module LIMm', are transmitted towards a common transmission medium, denoted UDATA' in Fig. 3, using an access method which is again based on priorities of the individual interface modules. Again these interface module priorities, denoted LIM1 PR' for LIM1' to LIMmPR' for LIMm' are made dependent upon the different considered ATM service categories associated to at least part of the packets of the individual incoming bitstreams. To this purpose, these packets are first routed towards the appropriate storage queue, which are also uniquely attributed to a specific ATM service category. Storage queues LIM1SQ1', UM2SQ1' (not shown on Fig. 3) and LiMmSQ1' for instance all correspond to ATM service category 1, storage queues LIM1 SQ2' to LIMmSQ2' (not shown on Fig. 3) correspond to ATM service category 2, etc., and storage queues LIM1 SQq' to LIMmSQq' correspond to ATM service category q. To route the individual packets of the incoming ATM input bitstreams towards the appropriate storage queues on the basis of at least one connection parameter indicating the associated ATM service category, an interface module routing means denoted RM1' to RMm' is included within each respective interface module LIM1' to LIMm'. The plurality of these interface module routing means then forms the routing means RM' of the data transmission arrangement DTA'. Each individual interface module routing means RM1' to RMm' is comparable to the routing means RM described for the first embodiment of the date transmission arrangement DTA in a previous paragraph.

In the second embodiment DTA' of the data transmission arrangement, a distinct queue priority, denoted LIM1QPR1' to LIM1 QPRq' for respective storage queues LIM1SQ1' to LIM1SQq' to LIMmQPR1' to LIMmQPRq' for respective storage queues LIMmSQ1' to LIMmSQq' is determined for each of the m x q distinct storage queues. This is performed by an associated distinct queue priority determining means, denoted LIM1QPDM1' to LIMmQPDMq', which is included in the same interface module as the associated storage queue. After the individual distinct queue priorities of the associated distinct storage queues within an interface module have been determined, the interface module priority is derived from them, according to a predetermined algorithm. In a first variant of the second embodiment of the data transmission arrangement DTA', this predetermined algorithm again consists of selecting the maximum amongst all individual distinct storage queue priorities determined within one respective interface module. However other algorithms can be used as well in other variants of this second embodiment. In general these algorithms are related to the predetermined comparison criterion used for determining access to the common transmission medium UDATA', from the resulting interface module priorities, although this is not a prerequisite.

The determination of the respective interface module priority values from the distinct queue priorities, is performed within each interface module by means of an interface module priority means, denoted LIM1 PRM' for the first interface module LIM1' to LIMmPRM' for the mth interface module LIMm'.

As was the case for the first embodiment of the data transmission arrangement, access to the common transmission medium UDATA' is performed by the known method of comparing the individual interface module priorities and selecting one of them based on a predetermined comparison criterion. In a first variant of the second embodiment DTA' this predetermined comparison criterion again consists of selecting the interface module having the highest interface module priority value, whereby this access arbitration function is again performed by means of a dedicated access interface, denoted AAM' in Fig. 3, similar to the one that was already described for the first embodiment of this data transmission arrangement. However in other variant embodiments other comparison criteria may be used.

The individual distinct storage queue priorities LIM1 QPR1' to LIMmQPRq' are determined according to several principles. A first one, used in some variants of the second embodiment, is similar to the one already described for the first variant of the first embodiment, and involves that each ATM service category is associated to a separate priority range. In the first embodiment this range could be reduced to one single integer value, since there were no competing interface modules with a similar ATM service category storage queue. This situation is however different in the second embodiment, therefore a range of values is associated to each ATM service category, whereby in some other variant embodiments these ranges have non-overlapping values. These non-overlapping ranges not only directly reflect the ATM service categories from the priority values, it also seriously eases the already mentioned connection admission control function that needs to be performed in the network of which also this embodiment of the data transmission arrangement forms part.

Since in the first variant of the second embodiment again access is granted to the unit with the highest priority, the ATM service category requiring the lowest delay, needing to be served first under all circumstances, will thus be attributed to the priority ranges with the highest values.

A second principle, also used and described in a previous paragraph, for some variants of the first embodiment of the data transmission arrangement, is the attribution of some ATM service category priority values to two subclasses with which, in yet other variants, two different, non-overlapping ranges are associated. This principle is accompanied by an alternate selection from a value of one of both ranges for the determination of the distinct storage queue priority. Also this principle can be further refined in yet other variant embodiments by allowing the predetermined instances at which this switchover from one range to the other occurs, to be dependent on the ATM service category itself, and on a predetermined amount of cells to be transmitted from the associated storage queue, as was also described for the first embodiment in a previous paragraph of this document.

The first and the second mentioned principles and their refinements however are not sufficient for granting fair access between queues associated to identical ATM service categories, but part of different interface modules. To cope with this issue, the respective queue priorities of distinct storage queues associated to the same ATM service category, but included in different interface modules, for instance LIM1SQ1', LIM2SQ1' (not shown on Fig. 3) and LIMmSQ1', are therefore made adaptable after each grant cycle. The adaptation being such that, when a packet or cell is transmitted from one of these queues, the queue priority of this one queue is reset to the lowest value within its associated range, whereas in all other interface modules, the priority of this queue associated to the same ATM service category, is increased within its range for generating a priority with a higher access probability. This principle is called ageing, and is thus used for fairness between competing modules with storage queues associated to the same ATM service category. This is the reason why in fact each queue is attributed at least one range of values, in stead of some predetermined integer numbers, from which the priority is selected. In these embodiments where the interface module with the maximum interface module priority is granted access to the common transmission medium, the storage queue having transmitted a cell will send a control signal to the associated queue priority determining means for resetting the corresponding queue priority towards the lowest value within its range. These control signals between the storage queues and the associated queue priority determining means are denoted CS11' to CS1q' for respective storage queues LIM1SQ1' to LIM1SQq' to CSm1' to CSmq' for respective storage queues LIMmSQ1' to LiMmSQq' on Fig. 3.

For the other interface modules including a storage queue associated to the some ATM category as the storage queue having transmitted a cell, the associated queue priority values ore increased, for instance with a predetermined integer number, until the maximum value within the range is used. However other functions for increasing the priority may be used as well in other embodiments. In general these queue priorities are changed to a value guaranteeing a higher access probability to the common transmission medium.

The latter ageing mechanism therefore implies that each queue priority determining means has to be informed about the "winning" priority, as determined by the access interface AAM'. This feedback can be realised by means of m x q individual direct feedback signals between the access interface AAM' and the m x q individual queue priority determining means, as is indicated on Fig. 3 by means of the WP' signals, each carrying the winning priority value after each grant cycle. In other variant embodiments, this feedback can also consist of a feedback signal between the access interface and the individual interface module priority means, which are then further adopted to transfer this information back to all or the appropriate storage queues.

It has to be remarked that this ageing mechanism can be used for both the guaranteed cell rate as the non-guaranteed cell rate subclasses. However, for these non-guaranteed cell rate priority subclasses, other priority determining mechanisms such as weighted fair queuing are considered to be more appropriate as is commonly known by a person skilled in the art. Since these mechanisms are extensively described in the literature, they will not be further described in this document.

In the variant of the second embodiment which is used in the ADSL access adapter in the upstream direction, all three mentioned principles as well as all possible refinements for determining the distinct individual queue priorities are combined for generating the final distinct queue priorities. The result is shown on Fig. 4, representing queue priority determining means LIM1QPDM1' associated to storage queue LIM1SQ1' of Fig. 3. The main architecture of this queue priority determining means is similar to the one shown in Fig. 2 for the first embodiment of the data transmission system and basically includes two programmable counters, in Fig. 4 denoted CT1SQ1' for the first programmable counter and LPC11' for the second load programmable counter. As for the first embodiment, the first programmable counter CT1SQ1' counts for T1SQ1' clock periods (clock input not shown on Fig. 4), whereas the second programmable counter LPC11', upon being triggered by the first counter via its load input L', loads its starting value B1SQ1' from a memory MB1SQ1', to its S' input and starts decrementing this initial output value with 1 each time a cell from the corresponding storage queue LIM1SQ1' is transmitted to the common transmission medium UDATA'. This latter information is provided by the CS11' signal, sent by the storage queue LIM1SQ1' towards the D' input terminal of the second programmable counter LPC11'. The starting value B1SQ1' of this second counter is again equal to the predetermined amount of cells to be attributed with and transmitted with a priority of the guaranteed-cell-rate priority subclass, in the access adapter embodiment corresponding to the highest of both priority ranges associated to a particular ATM service category. Similarly, a priority of the lowest of both ranges, or , more in general the non-guaranteed-cell-rate subclass, results in a less access probability.

The output signal of this second programmable counter, appearing on the Q' output terminal of Fig. 4, is coupled to a comparator, COMP', which checks whether the output signal of the second programmable counter LPC11' is still positive. The output signal of the comparator COMP' is a control input signal to a control input terminal S' of a selection device or multiplexer MUX11', which further has two data input lines carrying respective data input signals GPR11' and NGPR11'. Both data input signals, GPR11' and NGPR11' are respectively generated by a guaranteed-cell rate priority means, denoted GCR11' and a non-guaranteed cell rate priority means, denoted NGCR11' on Fig. 4. The guaranteed cell rate priority means, GCR11', includes an ageing counter, denoted AC11' , which is resettable upon a cell sent from the corresponding queue LIM1SQ1', and which is incremented with 1 upon a cell of the same ATM service category, but from another interface module, being transmitted. This latter event is detected in this variant embodiment by a second comparator, COMP11', which thereby transmits a control signal denoted WQVLQ11' to the I' input of the ageing counter AC11'.

This ageing counter AC11' determines the least significant bits of the guaranteed-cell rate priority value GPR11'. These least significant bits are denoted LG11' on Fig. 4. This ageing counter is further programmed with an upper limit value, for instance during start-up of the data transmission arrangement, this upper limit thus corresponding to the upper limit value of the least significant bits of the guaranteed cell rate subclass priority associated to the corresponding ATM service category.

The GCR11' device further includes another memory, denoted by MSBGCR11', being programmable and including the four most significant bits of the GPR11' value, represented as MG11'. These are further combined with the least significant bits LG11' generated in the ageing counter, in a combining means COMB', to finally form the value of the guaranteed cell rate subclass priority GPR11'.

The ageing counter AC11' is reset to a predetermined value, in this embodiment being 1 each time a cell of the corresponding storage queue LIM1SQ1' is sent. This is indicated by the value of the signal CS11' between this storage queue and the reset input denoted R' of the ageing counter.

In this embodiment, the most significant bits for generating the guaranteed cell rate subclass priority are unique for each ATM service category. Therefore, the second comparator COMP11', adapted to verify whether the winning priority on the access request interface AAM' was originating from a storage queue associated to the same ATM service category as LIM1SQ1', compares these most significant bits MG11' with the most significant bits of the wining priority data signal WP'. The control signal WQVLQ11' to the I' input of the ageing counter AC11' is such that, if these two most significant bits groups match , the ageing counter AC11' increases its output value LG11' with 1. In the special case where the own priority was the winning priority, this action is performed as well, but however overruled by the resetting of the counter by the CS11' control signal, as previously explained.

The NGCR11' device for determining the NGCR subclass priority may be similar to the GCP11' device in some variant embodiments, but may as well include the necessary circuitry for performing weighted fair queuing algorithms, as was already mentioned.

The multiplexer MUX11' finally delivers the queue priority LIM1QPR1' as either the GPR11' or the NGPR11' value, upon control of its control input signal at the S' control input terminal. If the Q' output signal of the counter is still positive, as is detected by the comparator COMP', the GPR11' value is output at the queue priority value; similarly, if the Q' output signal of the counter is negative, meaning that all B1SQ1' cells are transmitted with high priority during the T1SQ1' clock pulses of the first timer, the NGPR11' value is the queue priority value LIM1SQ1'. In case not all B1SQ1' cells are transmitted during the T1SQ1' clock periods of the first timer, the triggering of the first timer again results in B1SQ1' cells to be loaded in the second timer. This means that the guaranteed cell rate subdass priority remains to be assigned.

It has again to be remarked that in Fig. 4 the necessary circuitry for generating the "empty queue" priority value is again not shown in order to not overload the drawings. However the same circuitry as that mentioned for the first embodiment of the data transmission arrangement DTA can be applied in this case as well, besides other possible solutions which are well known to a person skilled in the art. In the described access adapter variant of the second embodiment, the "zero" value is reserved as priority value for the empty queues as well.

It further needs to be remarked that also in this second embodiment the sum of the guaranteed cell rate values, as obtained by dividing the predetermined number of cells to be transmitted with the GCR subclass priority, and denoted BiSQi' for interface module i and storage queue or ATM service category j, by the time period of the corresponding first timer being the product of TiSQi' and T', for interface module i and storage queue or ATM service category i, with T' representing the dock period of the first programmable timer, summed over all ATM service categories q and over all units m, should not exceed the line rate or interface rate at the UDATA bus since for these guaranteed cell rate subclasses no overbooking is allowed. This can again be represented by the following formula :

$$\sum_{j=1}^{q} \sum_{i=1}^{m} \frac{BiSQj'}{TiSQj'.T'} \leq Line\,Rate\,UDATA'$$

whereby BiSQi' corresponds to the predetermined amount of cells to be transmitted from storage queue j of interface module i, at the guaranteed cell rate subclass priority value,

whereby TiSQj corresponds to the predetermined amount of clock pulses the first programmable counter associated to storage queue j of interface module i, is counting down, and

whereby T' corresponds to the time of one clock period of this first programmable counter associated to storage queue j of interface module i,

again, to be guaranteed by the connection admission control function previously mentioned.

It also finally to be remarked that for proper operation of all variants of the first and the second embodiment of the data transmission arrangement, the necessary timing and synchronisation signals need to be provided. Since a person skilled in the art is however familiar with the circuitry necessary for providing these signals, and since these signals and associated circuitry are beyond the scope of the invention, they are not described in this document.

While the principles of the invention have been described above in connection with specific apparatus, it is to be clearly understood that this description is made only by way of example and not as a limitation on the scope of the invention.

## Claims

1. Method for prioritised data transmission to a common transmission medium (UDATA;UDATA') of a plurality of interface modules (LIM1/LIMq;LIM1'/LIMm' coupled to it, and interfacing at least one input bitstream (BS;LIM1BS'/LIMmBS') with said common transmission medium (UDATA;UDATA'), each interface module of said plurality including at least one storage queue for which a queue priority is determined which is further used for determining a module priority (LIM1PR/LIMqPR;LIM1PR'/LIMmPR') on the basis of which access to said common transmission medium is arbitrated during a grant cycle, for at least one interface module (LIM1;LIM1') amongst said plurality, the module priority (LIM1PR;LIM1PR´) as well as the queue priority being dependent on at least one connection parameter associated to packets of said at least one input bitstream (BS;LIM1BS'/LIMmBS')
**characterised in that**
the queue priority is selected from 2 distinct priority subclasses, each resulting in a different probability of accessing the common transmission medium, whereby the queue priority determining means (LIM1QPDM1;QPDM1') is further adapted to select, at predetermined instances, the higher of said priority subclasses, and at other instances the lower.

2. Method according to claim 1
**characterised in that**
said method includes a first step of routing at least part of said packets of said at least one input bitstream (BS; LIM1BS'/LIMmBS') into said at least one storage queue (LIM1SQ1;LIM1SQ1'/LIM1SQq') of said at least one interface module (LIM1;LIM1'), based on the values of said at least one connection parameter.

3. Method according to claim 1 or 2
**characterised in that**
said predetermined instances are further related to a predetermined amount of packets (B1SQ1;B1SQ1') to be transmitted from said at least one specific storage queue (LIM1SQ1;LIM1SQ1').

4. Method according to claim 1
**characterised in that**
for said at least one specific storage queue (LIM1SQ1;LIM1SQ1'), said at least two priority subclasses comprise predetermined sets of non-overlapping values.

5. Method according to any of the previous claims 1 to 4
**characterised in that**
in case said at least one interface module only includes one storage queue (LIM1SQ1), said interface module priority (LIM1PR) corresponds to the queue priority (LIM1QPR1) associated to said one storage queue.

6. Method according to any of the previous claims 1 to 4
**characterised in that**
in case said at least one interface module includes a plurality of storage queues, each storage queue being associated to a distinct predetermined combination of values of said at least one connection parameter, the respective queue priorities for each distinct storage queue within said interface module are selected at said predetermined instances from the at least two subclasses, such that for distinct queues, the distinct queue priorities have distinct values.

7. Method according to any of the previous claim 1 to 6
**characterised in that**
for said method being applicable to a first interface module (LIM1') and a second interface module (LIMm') of said plurality, each respectively including a first, respectively a second, distinct storage queue (LIM1SQ1';LIMmSQ1') with an associated first, respectively second, distinct queue priority (LIM1QPR1';LIMmQPR1'), with said first distinct storage queue (LIM1SQ1') and said second distinct storage queue (LIMmSQ1') being related to the same predetermined combination of values of said at least one connection parameter,
said first distinct queue priority (LIMIQPR1') and said second distinct queue priority (LIMmQPR1') are adaptable after each grant cycle.

8. Method according to claim 7
**characterised in that**,
said first distinct queue priority (LIM1QPR1') is adapted after said grant cycle towards a value guaranteeing a lower probability of access in case said first interface module (LIM1') has transmitted at least one packet from said first distinct storage queue (LIM1SQ1') during said grant cycle, whereby said second distinct queue priority (LIMmQPR1') is adopted towards a value guaranteeing a higher probability of access after said grant cycle.

9. Method according to claim 8
**characterised in that**
said second distinct queue priority (LIMmQPR1') is not adapted in case said second distinct storage queue (LIMmSQ1') is empty.

10. Data transmission arrangement (DTA;DTA') including a plurality of interface modules(LIM1/LIMq;LIM1'/LIMm'), for interfacing at least one input bitstream (BS;LIM1BS'/LIMmBS') with a common transmission medium (UDATA;

UDATA'), each interface module (LIM1/LIMq;LIM1'/LIMm') including at least one storage queue (LIM1SQ1/LIMqSQq; LIM1SQ1'/ LIMmSQq') adapted to store packets of said at least one input bitstream (BS; LIM1BS'/LIMmBS'), prior to accessing said common transmission medium (UDATA; UDATA'), and an associated queue priority determining means (LIM1QPDM1; LIM1QPDM1' /LIM1QPDMq') being adapted to calculate a queue priority (LIM1QPR1; LIM1QPR1'/LIM1QPRq') associated to said at least one storage queue (LIM1SQ1; LIM1SQ1'/LIM1SQq'), said each interface module having a respective module priority (LIM1PR/UMqPR; LIM1PR'/ LIMmPR') on the basis of which access to said common transmission medium (UDATA;UDATA')is arbitrated during a grant cycle, and which is determined by an interface module priority means (LIM1PRM/LIMqPRM; LIM1PRM'/ LIMmPRM') included in said each interface module, - whereby said interface module priority means (LIM1PRM'; LIM1PRM') is further adapted to determine said interface module priority (LIM1PR; LIM1 PR') from said at least one queue priority (LIM1QPR1; LIMIQPR1'/ UM1QPRq'), for at least one interface module (LIM1;LIMI1') amongst said plurality, the module priority (LIM1PR;LIM1PR') as well as the queue priority being is dependent on at least one connection parameter associated to said packets of said at least one input bitstream (BS;LIM1BS'/LIMmBS'), **characterised in that**

the queue priority is selected from 2 distinct priority subclasses, each resulting in a different probability of accessing the common transmission medium, whereby at selected instances the higher of said priority subclasses is selected, and at other instances the lower of said priority subclasses.

11. Data transmission arrangement (DTA;DTA') according to claim 10
    **characterised in that**

    - said data transmission arrangement further includes routing means (RM;RM'), adapted to route at least part of said packets of said at least one input bitstream (BS;LIM1 BS'/LIMmBS') towards said at least one storage queue (LIM1SQ1;LIM1SQ1'/LIM1SQq') included in said at least one interface module, based on the value of said at least one connection parameter.

12. Data transmission arrangement (DTA;DTA') according to claim 10 or 11 **characterised in that**
    said predetermined instances are further related to a predetermined amount of pockets (B1SQ1;B1SQ1') to be transmitted from said at least one storage queue (LIM1SQ1;LIM1SQ1').

13. Data transmission arrangement (DTA;DTA') according to any of the previous claims 10 to 12
    **characterised in that**
    for said at least one specific storage queue (LIM1SQ1;LIM1SQ1'), said at least two priority subclasses comprise predetermined sets of non-overlapping values.

14. Data transmission arrangement (DTA) according to any of the claims 10 to 13 **characterised in that**
    in case said at least one interface module includes one storage queue (LIM1SQI), said interface module priority (LIM1PR) corresponds to the queue priority (LIM1QPR1) associated to said one storage queue.

15. Data transmission arrangement (DTA) according to any of the claims 10 to 13 **characterised in that**
    in case said at least one interface module includes a plurality of distinct storage queues, each corresponding to a distinct predetermined combination of values of said at least one connection parameter, the respective queue priority determining means associated to said respective distinct storage queues are adapted to select, at said predetermined instances, said respective corresponding queue priorities from the at least two subdasses, such that for distinct queues, the distinct queue priorities have distinct values

16. Data transmission arrangement (DTA') according to claims 10 to 15
    **characterised in that**

    - said at least one interface module corresponds to a first interface module (LIM1') and a second interface module (LIMm') of said plurality,
    - whereby a first distinct storage queue (LIM1SQ1') with an associated first distinct queue priority (LIM1QPR1') of said first interface module (LIM1') is related to the same predetermined combination of values of said at least one connection parameter as a second distinct storage queue (LIMmSQ1') with an associated second distinct queue priority (LIMmQPR1') of said second interface module (LIMm'), whereby
    - a first, respectively a second, distinct queue priority determining means, (LIM1QPDM1';LIMmQPDM1'), each respectively included in said first, resp. said second interface module, are respectively adapted to change said first, resp said second, distinct queue priority (LIM1QPR1';LIMmQPR1'), after each grant cycle.

**17.** Data transmission arrangement (DTA') according to claim 16
**characterised in that**
in case said first interface module (LIM1') has transmitted at least one pocket from said first distinct storage queue (LIM1SQ1'), said first distinct priority determining means (LIM1QPDM1') is adapted to reset said first distinct queue priority (LIM1QPR1') after said grant cycle towards a value guaranteeing a lower probability of access, whereby said second distinct priority determining means (LIMmQPDM1') is adapted to change said second distinct queue priority (LIMmQPR1') after said grant cycle towards a value guaranteeing a higher probability of access.

**18.** Data transmission arrangement (DTA') according to claim 17
**characterised in that**
said second distinct priority determining means (LIMmQPRDM1') is further controlled by a control signal, indicating whether said second distinct storage queue is empty, thereby not adapting said second distinct priority when said second distinct storage queue is empty.

**Revendications**

**1.** Procédé pour transmission priorisée de données pour un support de transmission commun (UDATA; UDATA') d'une pluralité de modules d'interface (LIM1/LIMq; LIM1'/LIMm') couplés à ce support, et interfaçant au moins un flux binaire d'entrée (BS; LIM1BS'/LIMmBS') au support de transmission commun (UDATA, UDATA'), chaque module d'interface de ladite pluralité comprenant au moins une file d'attente de stockage pour laquelle est déterminée une priorité de file d'attente qui est utilisée ensuite pour déterminer une priorité de module (LIM1PR/LIMqPR ;LIM1PR'/ LIMmPR') sur la base de laquelle l'accès au dit support de transmission commun est arbitré au cours d'un cycle d'octroi, pour au moins un module d'interface (LIM1; LIM1') parmi ladite pluralité, la priorité de module (LIM1PR; UM1PR') ainsi que la priorité de file d'attente étant dépendante d'au moins un paramètre de connexion associé aux paquets dudit au moins un flux binaire d'entrée (BS; LIM1BS'/UMmBS'),
**caractérisé en ce que**
la priorité de file d'attente est sélectionnée à partir de 2 sous-classes de priorité distinctes, chacune résultant en une probabilité différente d'accéder au support de transmission commun, dans lequel les moyens déterminant la priorité de file d'attente j (LIM1QPDM1; QPDM1') sont en outre adaptés pour sélectionner, à des instants prédéterminés, la plus élevée desdites sous-classes de priorité et, à d'autres instants, la plus faible.

**2.** Procédé selon la revendication 1, **caractérisé en ce que**
ledit procédé comprend une première étape de routage au niveau d'au moins une partie desdits paquets dudit au moins un flux binaire d'entrée (BS; LIM1BS'/LIMmBS') dans ladite au moins une file d'attente de stockage (LIM1SQ1; LIM1SQ1'/LIM1SQq') dudit au moins un module d'interface (LIM1; LIM1'), en se basant sur les valeurs dudit au moins un paramètre de connexion.

**3.** Procédé selon la revendication 1 ou 2, **caractérisé en ce que**
lesdits instants prédéterminés se rapportent en outre à une quantité prédéterminée de paquets (B1SQ1; B1SQ1') devant être transmis de ladite au moins une file d'attente de stockage spécifique (LIM1SQ1; LIM1SQ1').

**4.** Procédé selon la revendication 1, **caractérisé en ce que**
pour ladite au moins une file d'attente de stockage spécifique (LIM1SQ1; LIM1SQ1'), lesdites au moins deux sous-classes de priorité comprennent des ensembles prédéterminés de valeurs ne se recoupant pas.

**5.** Procédé selon l'une quelconque des revendications précédentes 1 à 4,
**caractérisé en ce que**
dans le cas où ledit au moins un module d'interface ne comprend qu'une file d'attente de stockage (LIM1SQ1), ladite priorité de module d'interface (LIM1PR) correspond à la priorité de file d'attente (LIM1QPR1) associée à ladite une file d'attente de stockage.

**6.** Procédé selon l'une quelconque des revendications précédentes 1 à 4,
**caractérisé en ce que**
dans le cas où ledit au moins un module d'interface comprend une pluralité de files d'attente de stockage, chaque file d'attente de stockage étant associée à une combinaison prédéterminée distincte de valeurs dudit au moins un paramètre de connexion, les priorités respectives de file d'attente pour chaque file d'attente de stockage distincte dans ledit module d'interface sont sélectionnées aux dits instants prédéterminés à partir des au moins deux sous-classes, de sorte que pour des files d'attente distinctes, les priorités de file d'attente distinctes aient des valeurs distinctes.

7. Procédé selon l'une quelconque des revendications précédentes 1 à 6,
**caractérisé en ce que**
pour ledit procédé étant applicable à un premier module d'interface (LIM1') et à un deuxième module d'interface (LIMm') de ladite pluralité, chacun comprenant respectivement une première, respectivement une deuxième file d'attente de stockage distincte (LIM1SQ1'; LIMmSQ1') avec une première, respectivement une deuxième priorité distincte associée de file d'attente (LIM1QPR1'; LIMmQPR1'), ladite première file d'attente de stockage distincte (LIM1SQ1') et ladite deuxième file d'attente de stockage distincte (LIMmSQ1') se rapportant à la même combinaison prédéterminée de valeurs dudit au moins un paramètre de connexion,
ladite première priorité distincte de file d'attente (LIM1QPR1') et ladite deuxième priorité de file d'attente (LIMmQPR1') sont modifiables après chaque cycle d'octroi.

8. Procédé selon la revendication 7, **caractérisé en ce que**,
ladite première priorité de file d'attente distincte (LIM1QPR1') est modifiée après ledit cycle d'octroi pour prendre une valeur garantissant une probabilité d'accès plus faible dans le cas où ledit premier module d'interface (LIM1') a transmis au moins un paquet de ladite première file d'attente de stockage distincte (LIM1SQ1') au cours dudit cycle d'octroi, ladite deuxième priorité de file d'attente distincte (LIMmQPR1') étant modifiée pour prendre une valeur garantissant une probabilité d'accès plus élevée après ledit cycle d'octroi.

9. Procédé selon la revendication 8, **caractérisé en ce que**
ladite deuxième priorité distincte de file d'attente (LIMmQPR1') n'est pas modifiée dans le cas où ladite deuxième file d'attente de stockage distincte (LIMmSQ1') est vide.

10. Dispositif de transmission de données (DTA;DTA') comprenant une pluralité de modules d'interface (LIM1/LIMq; LIM1'/LIMm') pour interfacer au moins un flux binaire d'entrée (BS; LIM1BS'/LIMmBS') avec un support de transmission commun (UDATA; UDATA'), chaque module d'interface (LIM1/LIMq; LIM1'/LIMm') comportant au moins une file d'attente de stockage (LIM1SQ1/LIMqSQq; LIM1SQ1'/LIMmSQq') adaptée pour stocker des paquets dudit au moins un flux binaire d'entrée (BS; LIM1BS'/LIMmBS') avant d'accéder au dit support de transmission commun (UDATA; UDATA'), et des moyens associés déterminant la priorité de file d'attente (LIM1QPDM1; LIM1QPDM1'/LIM1QPDMq') étant adaptés pour calculer une priorité de file d'attente (LIM1QPR1; LIM1QPR1'/LIM1QPRq') associée à ladite au moins une file d'attente de stockage (LIM1SQ1; LIM1SQ1'/LIM1SQq'), chaque dit module d'interface ayant une priorité de module respective (LIM1PR/LIMqPR; LIM1PR'/LIMmPR') sur la base de laquelle l'accès au dit support de transmission commun (UDATA; UDATA') est arbitré durant un cycle d'octroi, et qui est déterminée par des moyens de priorité de module d'interface (LIM1PRM/LIMqPRM; LIM1PRM'/LIMmPRM') compris dans chaque dit module d'interface,
dans lequel lesdits moyens de priorité de module d'interface (LIM1PRM; LIM1PRM') sont en outre adaptés pour déterminer ladite priorité de module d'interface (LIM1PR; LIM1PR') à partir de ladite au moins une priorité de file d'attente (LIM1QPR1; LIM1QPR1'/LIM1QPRq'), pour au moins un module d'interface (LIM1;LIM1') parmi ladite pluralité, la priorité de module (LIM1PR; LIM1PR') ainsi que la priorité de file d'attente étant dépendantes d'au moins un paramètre de connexion associé aux dits paquets dudit au moins un flux binaire d'entrée (BS; LIM1BS'/LIMmBS'),
**caractérisé en ce que**
la priorité de file d'attente est sélectionnée à partir de 2 sous-classes de priorité distinctes, chacune résultant en une probabilité différente d'accéder au support de transmission commun, moyennant quoi la plus élevée desdites sous-classes de priorité est sélectionnée aux instants sélectionnés et la plus faible desdites sous-classes de priorité à d'autres instants.

11. Dispositif de transmission de données (DTA; DTA') selon la revendication 10, **caractérisé en ce que**
ledit dispositif de transmission de données comprend en outre des moyens de routage (RM; RM'), adaptés pour acheminer au moins une partie desdits paquets dudit au moins un flux binaire d'entrée (BS; LIM1BS'/LIMmBS') vers ladite au moins une file d'attente de stockage (LIM1SQ1; LIM1SQ1'/LIM1SQq') comprise dans ledit au moins un module d'interface, sur la base de la valeur dudit au moins paramètre de connexion.

12. Dispositif de transmission de données (DTA; DTA') selon la revendication 10 ou 11, **caractérisé en ce que**
lesdits instants prédéterminés se rapportent en outre à une quantité prédéterminée de paquets (B1SQ1; B1SQ1') devant être transmis de ladite au moins une file d'attente de stockage spécifique (LIM1SQ1; LIM1SQ1').

**13.** Dispositif de transmission de données (DTA; DTA') selon l'une quelconque des revendications précédentes 10 à 12, **caractérisé en ce que**

pour ladite au moins une file d'attente de stockage spécifique (LIM1SQ1; LIM1SQ1'), lesdites au moins deux sous-classes de priorité comprennent des ensembles prédéterminés de valeurs ne se recoupant pas.

**14.** Dispositif de transmission de données (DTA) selon l'une quelconque des revendications précédentes 10 à 13, **caractérisé en ce que**

dans le cas où ledit au moins un module d'interface comprend une file d'attente de stockage (LIM1SQ1), ladite priorité de module d'interface (LIM1PR) correspond à la priorité de file d'attente (LIM1QPR1) associée à ladite une file d'attente de stockage.

**15.** Dispositif de transmission de données (DTA) selon l'une quelconque des revendications précédentes 10 à 13, **caractérisé en ce que**

dans le cas où ledit au moins un module d'interface comprend une pluralité de files d'attente de stockage distinctes, chacune correspondant à une combinaison prédéterminée distincte de valeurs dudit au moins paramètre de connexion, les moyens respectifs déterminant la priorité de file d'attente associés aux dites files d'attente de stockage distinctes respectives sont adaptés afin de sélectionner, aux dits instants prédéterminés, lesdites priorités de file d'attente correspondantes respectives à partir des au moins deux sous-classes de sorte que, pour les files d'attente distinctes, les priorités de file d'attente distinctes aient des valeurs distinctes.

**16.** Dispositif de transmission de données (DTA') selon les revendications 10 à 15, **caractérisé en ce que**

ledit au moins un module d'interface correspond à un premier module d'interface (LIM1') et à un deuxième module d'interface (LIMm') de ladite pluralité,

moyennant quoi une première file d'attente de stockage distincte (LIM1SQ1') avec une première priorité de file d'attente distincte associée (LIM1QPR1') dudit premier module d'interface (LIM1') se rapporte à la même combinaison prédéterminée de valeurs dudit au moins un paramètre de connexion qu'une deuxième file d'attente de stockage distincte (LIMmSQ1') avec une deuxième priorité de file d'attente distincte associée (LIMmQPR1') dudit deuxième module d'interface (LIMm'), dans lequel

des premiers, respectivement des deuxièmes moyens distincts déterminant la priorité de file d'attente, (LM1QPDM1'; LIMmQPDM1'), compris respectivement dans ledit premier, respectivement ledit deuxième module d'interface, sont respectivement adaptés pour changer ladite première, respectivement ladite deuxième priorité de file d'attente distincte (LIM1QPR1'; LIMmQPR1'), après chaque cycle d'octroi.

**17.** Dispositif de transmission de données (DTA') selon la revendication 16, **caractérisé en ce que**

dans le cas où ledit premier module d'interface (LIM1') a transmis au moins un paquet à partir de ladite première file d'attente de stockage distincte (LIM1SQ1'), lesdits premiers moyens distincts déterminant la priorité (LIM1QPDM1') sont adaptés pour repositionner ladite première priorité de file d'attente distincte (LIM1QPR1') après ledit cycle d'octroi vers une valeur garantissant une probabilité d'accès plus faible, lesdits deuxièmes moyens distincts déterminant la priorité (LIMmQPDM1') étant adaptés pour changer ladite deuxième priorité de file d'attente distincte (LIMmQPR1') après ledit cycle d'octroi pour prendre une valeur garantissant une probabilité d'accès plus élevée.

**18.** Dispositif de transmission de données (DTA') selon la revendication 17, **caractérisé en ce que**

lesdits deuxièmes moyens distincts déterminant la priorité (LIMmQPRDM1') sont en outre commandés par un signal de commande, indiquant si ladite deuxième file d'attente de stockage distincte est vide, ne modifiant pas de cette façon ladite deuxième priorité distincte lorsque ladite deuxième file d'attente de stockage distincte est vide.

**Patentansprüche**

**1.** Verfahren zur priorisierten Datenübertragung an ein gemeinsames Übertragungsmedium (UDATA; UDAIA') einer Mehrzahl von Schnittstellenmodulen (LIM1/LIMq; LIM1'/LIMm'), die damit gekoppelt sind, und Anpassen mindestens eines Eingabebitstroms (BS; LIM1BS'/LIMmBS') mit dem gemeinsamen Übertragungsmedium (UDATA; UDATA'), wobei jedes Schnittstellenmodul der Mehrzahl mindestens eine Speicherwarteschlange beinhaltet, für die eine Warteschlangenpriorität bestimmt wird, die außerdem zum Bestimmen einer Modulpriorität (LIM1PR/LIMqPR; LIM1PR'/LIMmPR') verwendet wird, auf deren Basis der Zugang zu dem gemeinsamen Übertragungsmedium während eines Zuordnungszyklus entschieden wird, für mindestens ein Schnittstellenmodul (LIM1; LiM1') unter der Mehrzahl,

wobei die Modulpriorität (LIM1PR; LIM1PR') sowie die Warteschlangenpriorität von mindestens einem Verbindungsparameter abhängig ist, der den Paketen des mindestens einen Eingabebitstroms (BS; LIM1BS'/LIMmBS') zugeordnet ist,

**dadurch gekennzeichnet, daß**

die Warteschlangenpriorität aus 2 verschiedenen Prioritätsunterklassen ausgewählt wird, wobei jede zu einer verschiedenen Wahrscheinlichkeit des Zuganges auf das gemeinsame Übertragungsmedium führt, wodurch die die Warteschlangenpriorität bestimmende Einrichtung (LIM1QPDM1; QPDM1') außerdem angepaßt ist, um an vorgegebenen Objekten die höhere der Prioritätsunterklassen auszuwählen und an anderen Objekten die niedrigere.

2. Verfahren nach Anspruch 1
   **dadurch gekennzeichnet, daß**
   das Verfahren einen ersten Schritt des Weiterleitens mindestens eines Teils der Pakete des mindestens einen Eingabebitstroms (BS; LIM1BS'/LIMmBS') in die mindestens eine Speicherwarteschlange (LIM1SQ1; LIM1SQ1'/LIM1SQq') des mindestens einen Schnittstellenmoduls (LIM1; LIM1') auf der Basis der Werte mindestens eines Verbindungsparameters beinhaltet.

3. Verfahren nach Anspruch 1 oder 2
   **dadurch gekennzeichnet, daß**
   die vorgegebenen Objekte außerdem eine vorgegebene Menge von Paketen (B1SQ1; B1SQ1') betreffen, die von der mindestens einen speziellen Speicherwarteschlange (LIM1SQ1; LIMISQ1') zu übertragen sind.

4. Verfahren nach Anspruch 1
   **dadurch gekennzeichnet, daß**
   für mindestens eine spezielle Speicherwarteschlange (LIM1SQ1; LIM1SQ1') mindestens zwei Prioritätsunterklassen vorgegebene Mengen von nichtüberlappenden Werten umfassen.

5. Verfahren nach einem der vorhergehenden Ansprüche 1 bis 4
   **dadurch gekennzeichnet, daß**
   falls das mindestens eine Schnittstellenmodul nur eine Speicherwarteschlange (LIM1SQ1) beinhaltet, die Schnittstellenmodulpriorität (LIM1PR) der Warteschlangenpriorität (LIM1QPR1) entspricht, die der einen Speicherwarteschlange zugeordnet ist.

6. Verfahren nach einem der vorhergehenden Ansprüche 1 bis 4
   **dadurch gekennzeichnet, daß**
   falls mindestens ein Schnittstellenmodul eine Mehrzahl von Speicherwarteschlangen beinhaltet, wobei jede Speicherwarteschlange, die einer verschiedenen vorgegebenen Kombination von Werten des mindestens einen Verbindungsparameters zugeordnet wird, die entsprechenden Warteschlangenprioritäten für jede verschiedene Speicherwarteschlange innerhalb des Schnittstellenmoduls an den vorgegebenen Objekten aus mindestens zwei Unterklassen ausgewählt werden, so daß für verschiedene Warteschlangen die verschiedenen Warteschlangenprioritäten verschiedene Werte aufweisen.

7. Verfahren nach einem der vorhergehenden Ansprüche 1 bis 6
   **dadurch gekennzeichnet, daß**
   für das Verfahren, das auf ein erstes Schnittstellenmodul (LIM1') und ein zweites Schnittstellenmodul (LIMm') der Mehrzahl anwendbar ist, jedes entsprechend eine erste, entsprechend eine zweite verschiedene Speicherwarteschlange (LIM1SQ1'; LIMmSQl') mit einer zugeordneten ersten, entsprechend zweiten verschiedenen Warteschlangenpriorität (LIM1QPR1'; LIMmQPR1') beinhaltet, mit der ersten verschiedenen Speicherwarteschlange (LIM1SQ1') und der zweiten verschiedenen Speicherwarteschlange (LIMmSQ1'), die die gleiche vorgegebene Kombination von Werten des mindestens einen Verbindungsparameters betreffen,
   wobei die erste verschiedene Warteschlangenpriorität (LIM1QPR1') und die zweite verschiedene Warteschlangenpriorität (LIMmQPR1') nach jedem Zuordnungszyklus anpaßbar ist.

8. Verfahren nach Anspruch 7
   **dadurch gekennzeichnet, daß**
   die erste verschiedene Warteschlangenpriorität (LIM1QPR1') nach dem Freigabezyklus an einen Wert angepaßt wird, der eine niedrigere Wahrscheinlichkeit des Zuganges garantiert, falls das erste Schnittstellenmodul (LIM1') mindestens ein Paket von der verschiedenen Speicherwarteschlange (LIM1SQ1') während des Freigabezyklus übertragen hat, wodurch die zweite verschiedene Warteschlangenpriorität (LIMmQPR1') an einen Wert angepaßt wird, der eine höhere Wahrscheinlichkeit des Zuganges nach dem Freigabezyklus garantiert.

9.  Verfahren nach Anspruch 8
    **dadurch gekennzeichnet, daß**
    die zweite verschiedene Warteschlangenpriorität (LIMmQPR1') nicht angepaßt wird, falls die zweite verschiedene Speicherwarteschlange (LIMmSQ1') leer ist.

10. Datenübertragungsanlage (DTA; DTA'), beinhaltend eine Mehrzahl von Schnittstellenmodulen (LIM1/LIMq; LIM1'/ LIMm'), zum Anpassen mindestens eines Eingabebitstroms (BS; LIM1BS'/LIMmBS') mit einem gemeinsamen Übertragungsmedium (UDATA; UDATA'), wobei jedes Schnittstellenmodul (LIM1/LIMq; LIM1'/LIMm') mindestens eine Speicherwarteschlange (LIM1SQ1/LIMqSQq; LIM1SQ1'/LIMmSQq') beinhaltet, die angepaßt ist, um Pakete des mindestens einen Eingabebitstroms(BS; LIM1BS'/LIMmBS') zu speichern, vor dem Zugang zu dem gemeinsamen Übertragungsmedium (UDATA/UDATA'), und eine zugeordnete die Warteschlangenpriorität bestimmende Einrichtung (LIM1QPDM1; LIM1QPDM1'/LIM1QPDMq), die angepaßt ist, um eine Warteschlangenpriorität (LIM1QPR1; LIM1QPR1'/LIM1QPRq') zu berechnen, die der mindestens einen Speicherwarteschlange (LIM1SQ1; LIM1SQ1'/LIM1SQq') zugeordnet ist, wobei jedes Schnittstellenmodul eine entsprechende Modulpriorität (LIM1PR/ LIMqPR; LIM1PR'/LIMmPR') aufweist, auf deren Basis der Zugang zu dem gemeinsamen Übertragungsmedium (UDATA; UDATA') während eines Zuordnungszyklus entschieden wird, und welche durch eine Einrichtung der Schnittstellenmodulpriorität (LIM1PRM/LIMqPRM; LIM1PRM'/LIMmPRM') bestimmt wird, die in jedem Schnittstellenmodul enthalten ist, - wodurch die Einrichtung der Schnittstellenmodulpriorität (LIM1PRM; LIM1PRM') außerdem angepaßt ist, um die Schnittstellenmodulpriorität (LIM1PR; LIM1PR') von mindestens einer Warteschlangenpriorität (LIM1QPR1; LIM1QPR1'/LIM1QPRq') zu bestimmen, für mindestens ein Schnittstellenmodul (LIM1; LIM1') unter der Mehrzahl,
    wobei die Modulpriorität (LIM1PR; LIM1PR') sowie die Warteschlangenpriorität abhängig von mindestens einem Verbindungsparameter ist, der den Paketen des mindestens einen Eingabebitstroms (BS; LIM1BS'/LIMmBS') zugeordnet ist,
    **dadurch gekennzeichnet, daß**
    die Warteschlangenpriorität aus 2 verschiedenen Prioritätsunterklassen ausgewählt wird, wobei jede zu einer verschiedenen Wahrscheinlichkeit des Zuganges auf das gemeinsame Übertragungsmedium führt, wodurch an ausgewählten Objekten die höhere der Prioritätsunterklassen ausgewählt wird und an anderen Objekten die niedrigere der Prioritätsunterklassen.

11. Datenübertragungsanlage (DTA/DTA') nach Anspruch 10
    **dadurch gekennzeichnet, daß**
    die Datenübertragungsanlage außerdem Routingeinrichtungen (RM; RM') beinhaltet, die angepaßt sind, um mindestens einen Teil der Pakete des mindestens einen Eingabebitstroms (BS; LIM1BS'/LIMmBS') an mindesten eine Speicherwarteschlange (LIM1SQ1; LIM1SQ1'/LIM1SQq') weiterzuleiten, die an mindestens einem Schnittstellenmodul enthalten ist, auf der Basis des Wertes des mindestens einen Verbindungsparameters.

12. Datenübertragungsanlage (DTA; DTA') nach Anspruch 10 oder 11 **dadurch gekennzeichnet, daß**
    die vorgegebenen Objekte außerdem eine vorgegebene Menge von Paketen (B1SQ1; B1SQ1') betreffen, die von der mindestens einen Speicherwarteschlange (LIM1SQ1; UM1SQ1') zu übertragen sind.

13. Datenübertragungsanlage (DTA; DTA') nach einem der vorhergehenden Ansprüche 10 bis 12
    **dadurch gekennzeichnet, daß**
    für mindestens eine spezielle Speicherwarteschlange (LIM1SQ1; LIM1SQ1') mindestens zwei Prioritätsunterklassen die vorgegebenen Mengen von nichtüberlappenden Werten umfassen.

14. Datenübertragungsanlage (DTA) nach einem der Ansprüche 10 bis 13 **dadurch gekennzeichnet, daß**
    falls mindestens ein Schnittstellenmodul eine Speicherwarteschlange (LIM1SQ1) beinhaltet, die Schnittstellenmodulpriorität (LIM1PR) der Warteschlangenpriorität (LIM1QPR1) entspricht, die einer Speicherwarteschlange zugeordnet ist.

15. Datenübertragungsanlage (DTA) nach einem der Ansprüche 10 bis 13 **dadurch gekennzeichnet, daß**
    falls mindestens ein Schnittstellenmodul eine Mehrzahl von verschiedenen Speicherwarteschlangen beinhaltet, die jede einer verschiedenen vorgegebenen Kombination von Werten des mindestens einen Verbindungsparameters entspricht, die entsprechenden die Warteschlangenpriorität bestimmenden Einrichtungen, die den entsprechenden verschiedenen Speicherwarteschlangen zugeordnet sind, angepaßt werden, um an vorgegebenen Objekten jeweilige entsprechende Warteschlangenprioritäten aus den mindestens zwei Unterklassen auszuwählen, so daß für verschiedene Warteschlangen die verschiedenen Warteschlangenprioritäten verschiedene Werte aufweisen.

**16.** Datenübertragungsanlage (DTA') nach den Ansprüchen 10 bis 15 **dadurch gekennzeichnet, daß**

- mindestens ein Schnittstellenmodul einem ersten Schnittstellenmodul (LIM1') und einem zweiten Schnittstellenmodul (LIMm') der Mehrzahl entspricht,
- wodurch eine erste verschiedene Speicherwarteschlange (LIM1SQ1') mit einer zugeordneten ersten verschiedenen Warteschlangenpriorität (UM1QPR1') des ersten Schnittstellenmoduls (LIM1') die gleiche vorgegebene Kombination von Werten mindestens eines Verbindungsparameters wie eine zweite verschiedene Speicherwarteschlange (LIMmSQ1') mit einer zugeordneten zweiten verschiedenen Warteschlangenpriorität (LIMmQPR1') des zweiten Schnittstellenmoduls (LIMm') betrifft, wodurch
- eine erste, entsprechend eine zweite, verschiedene die Warteschlangenpriorität bestimmende Einrichtung (LIM1QPDM1'; LIMmQPDM1'), die jede entsprechend im ersten bzw. zweiten Schnittstellenmodul enthalten ist, entsprechend angepaßt sind, um die erste bzw. die zweite verschiedene Warteschlangenpriorität (LIM1QPR1'; LIMmQPR1') nach jedem Zuordnungszyklus zu ändern.

**17.** Datenübertragungsanlage (DTA') nach Anspruch 16
**dadurch gekennzeichnet, daß**
falls das erste Schnittstellenmodul (LIM1') mindestens ein Paket von der ersten verschiedenen Speicherwarteschlange (LIM1SQ1') übertragen hat, die erste verschiedene die Priorität bestimmende Einrichtung (LIM1QPDM1') angepaßt wird, um die erste verschiedene Warteschlangenpriorität (LIM1QPR1') nach dem Zuordnungszyklus auf einen Wert zurückzusetzen, der eine niedrigere Wahrscheinlichkeit des Zugangs garantiert, wodurch die zweite verschiedene die Priorität bestimmende Einrichtung (LIMmQPDM1') angepaßt wird, um die zweite verschiedene Warteschlangenpriorität (LIMmQPR1') nach dem Zuordnungszyklus in einen Wert zu ändern, der eine höhere Wahrscheinlichkeit des Zuganges garantiert.

**18.** Datenübertragungsanlage (DTA') nach Anspruch 17
**dadurch gekennzeichnet, daß**
die zweite verschiedene die Priorität bestimmende Einrichtung (LIMmQPRDM1') außerdem durch ein Steuersignal gesteuert wird, das angibt, ob die zweite verschiedene Speicherwarteschlange leer ist, wodurch die zweite verschiedene Priorität nicht angepaßt wird, wenn die zweite verschiedene Speicherwarteschlange leer ist.

BS

DTA

RM

LIM1SQ1

LIM1

...

CS1

LIM1QPDM1  LIMqQPDMq

LIM1QPR1

LIM1PRM  LIMqPRM

LIM1PR

LIMq

LIMqSQq

CSq

LIMqQPRq

LIMqPR

AAM

UDATA

Fig. 1

EP 0 881 853 B1

**Fig. 2**

**Fig. 4**

EP 0 881 853 B1

EP 0 881 853 B1

Fig. 3

DTA'

LIM1BS'

LIMmBS'

RM'

RM1'

LIM1'

RMm'

LIMm'

LIM1SQ1'

LIMmSQ1'

LIM1SQq'

LIMmSQq'

CS11'

CSm1'

CS1q'

CSmq'

LIM1QPDM1'

LIMmQPDM1'

LIM1QPDMq'

LIMmQPDMq'

LIM1QPR1'

LIMmQPR1'

LIM1QPRq'

LIMmQPRq'

LIM1PRM'

LIMmPRM'

LIM1PR'

LIMmPR'

WP'

WP'

AAM'

UDATA

20